# DEMANDE DE BREVET EUROPEEN

(11) **EP 3 943 900 A1**
(43) Date de publication de la demande: **26.01.2022**
(21) Numéro de dépôt: 21186485.5
(22) Date de dépôt: 19.07.2021
(51) Int. Cl.: G01J 3/02, G01J 3/12, G01J 3/28

(54) **SYSTEME OPTIQUE D'IMAGERIE MULTISPECTRALE AMELIORE**

(30) Priorité: 23.07.2020 FR 2007752
(71) Demandeur: THALES, 92400 Courbevoie (FR)
(72) Inventeur: LAURENT, François, 06156 CANNES LA BOCCA (FR)
(74) Mandataire: Marks & Clerk France

(57) **Abrégé**

Système optique d'imagerie multispectrale (1) comprenant :
- un système optique dit téléscope (T) adapté pour collecter une lumière (L) issue d'une scène à observer de manière à former une image intermédiaire (*Iₜ*) dans un plan focal image (*PF_{im,t}*) dudit télescope,
- un système optique dit objectif imageur (OI), un plan focal objet (*PF_{ο,OI}*) dudit objectif imageur étant confondu avec le plan focal image dudit télescope
- un détecteur (Det) adapté pour acquérir une image de l'image intermédiaire par l'objectif imageur,
- un système de filtrage spectral et spatial dit filtre amont (*F*₁), ledit filtre amont comprenant:
- un élément (Diaph) disposé dans le plan focal image (*PF_{im,t}*) dudit télescope et comprenant n > 2 diaphragmes (*Dᵢ*), chaque diaphragme étant adapté pour définir un sous-faiceau (*SFᵢ*) associé à un champ de vue (FOV_{¡}) de la scène observée ;
- n filtres spectraux amont (*R*_{1*i*}) passe bande à une bande spectrale amont (Δ*λ*_{1*i*}) distincte des autres, chaque filtre spectral amont étant agencé de manière à filtrer un sous faisceau (*SFᵢ*) associé à un diaphragme (*Dᵢ*) ;
l'objectif imageur étant adapté pour former, sur le détecteur, n sous-images (*Iᵢ*) correspondant respectivement auxdits n champs de vue (*FOVᵢ*) de la scène associés aux n sous faiceaux (*SFᵢ*) *;*
ledit système d'optique imagerie comprenant en outre n filtres spectraux aval (*R*_{2*i*}), situés à proximité du détecteur et passe bande à une bande spectrale aval (*λ*_{2*i*}) distincte des autres, un filtre spectral aval étant agencé de manière à filtrer un sous faisceau (*SFᵢ*) associé à un filtre spectral amont, une bande spectrale aval (Δ*λ*_{2*i*}) d'un filtre spectral aval possédant un recouvrement non nul avec la bande spectrale amont (Δ*λ*_{2*i*}) du filtre spectral amont associé.

## Description

### Domaine technique :

La présente invention concerne le domaine imageurs multispectraux réalisant des images d'une scène à observer avec une résolution spatiale 2D et une dimension spectrale.

### Technique antérieure :

L'intérêt de l'imagerie multispectrale repose sur le fait que les propriétés d'émission, d'absorption et de réflexion du rayonnement électromagnétique d'une scène à observer dépend de la longueur d'onde d'illumination. Acquérir une pluralité d'image à différentes bande spectrales permet donc de cartographier de manière plus complète un objet ou une scène observée.

Il existe plusieurs types de système d'imagerie multispectrale qui diffèrent par la méthode d'acquisition des différents points de la scène à observer (point par point, ligne par ligne ou plein champ) et par la méthode utilisée pour décomposer la lumière collectée par le système d'imagerie selon plusieurs longueurs d'onde (diffraction, filtres fixes ou variables, détecteurs multilinéaires ...).

Un premier type d'imageur multispectral utilise une approche dans laquelle la scène observée est scannée ligne par ligne, le dispositif comprenant un élément dispersif selon une direction perpendiculaires à la direction de cette ligne permettant d'extraire l'information spectral de chaque pixel de la ligne de la scène imagée. L'image résultante est donc une image 2D (avec une résolution spatiale et spectrale 1D) acquise par un détecteur matriciel 2D. L'image 3D (2D spatiale x 1D spectrale) est obtenue en scannant progressivement la scène observée selon une direction perpendiculaire à la direction de la ligne. Ce type d'imageur est cependant complexe et nécessite un élément mécanique mobile afin d'acquérir l'image 3D. De plus, la méthode de scan et le temps nécessaire pour effectuer le scan complet de la scène peut ne pas être adapté selon le type d'application (par exemple pour des objets en mouvement).

Il est aussi connu d'utiliser des filtres spectraux variables placés devant un détecteur. En changeant de manière séquentielle les filtres et en réalisant l'acquisition de l'image associée à chaque filtre, il est possible de reconstruire une image 3D (2D spatiale x 1D spectrale) de la scène. Un des problèmes de cette méthode provient du fait que les filtres variables généralement utilisés (filtres à cristaux liquides, filtres acousto-optiques...) sont couteux et passe bande à une bande spectrale très réduite. Cette technique possède aussi le même désavantage que celle précédemment évoquée un temps d'acquisition d'une image 3D conséquent.

Alternativement, il est connu de réaliser de l'imagerie spectrale d'une scène à observer à l'aide d'un système d'imagerie comprenant des filtres passe bandes fixes. L'invention vise à résoudre une partie des problèmes de cette technique.

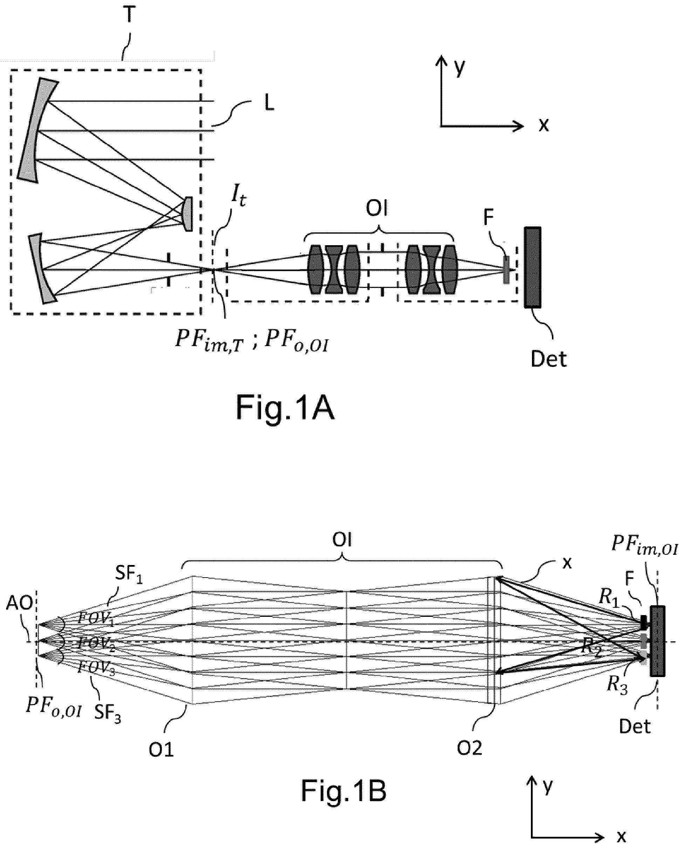

Les figures 1A et 1B illustrent schématiquement l'agencement typique de ce type de système d'imagerie connu de l'état de l'art. Le système comprend un télescope T, un système optique dit objectif imageur OI, un filtre spectral F et un détecteur Det.

Le télescope est adapté pour collecter une lumière L issue de la scène à observer (non représentée dans les figures 1A et 1B). Le télescope T est un système optique connu en soi et adapté pour réaliser l'image d'un objet situé à l'infini par rapport à la distance focale du télescope, dans le plan focal image *PF_{im,T}* du téléscope. De manière connue, il peut être constitué d'une pluralité de paraboles hors axe et/ou de miroirs ou encore de lentilles. L'image de la scène formée par le télescope est appelée image intermédiaire *Iₜ* car le système d'imagerie de la figure 1A comporte un objectif imageur avec un plan focal objet *PF_{o,OI}* confondu avec le plan focal image *PF_{im,T}* du télescope.

L'objectif imageur réalise l'image de cette image intermédiaire *Iₜ* sur le détecteur Det. Dans l'exemple purement illustratif de la figure 1A et de la figure 1B, l'objectif imageur comporte deux groupes optiques distincts, un premier groupe O1 réalisant l'image de l'image intermédiaire, dite première image, à l'infini et un deuxième groupe O2 réalisant l'image de la première image dans le plan focal image du deuxième groupe *PF_{im,OI}.*

Afin de réaliser une image multi-spectrale de la scène, le dispositif de l'art antérieur comprend un filtre spectral F situé à proximité du détecteur Det. Ce filtre spectral F comprend une pluralité de n régions passes-bandes à une bande spectrale distincte des autres. Ces régions sont adaptées et agencées pour que chaque région *Rᵢ* filtre un sous faisceau *SFᵢ* de la lumière L correspondant à un champ de vue FOV_{¡} différent des autres. Dans l'exemple de la figure 1B, donné à titre purement illustratif, le filtre F comprend 3 régions *R*₁*, R*₂ et *R*₃ passes bandes à respectivement, Δλ₁, Δλ₂ et Δλ₃, chacune filtrant respectivement un sous-faisceau *SF*₁, *SF*₂ et *SF*₃*.* Il est entendu que le filtre peut comprendre un nombre différent de régions.

Afin d'acquérir plusieurs sous images de la scène, chacune associée à une bande spectrale distinctes, un dispositif selon l'art antérieur peut utiliser deux méthodes différentes : un détecteur multilinéaire ou des diaphragmes de champs.

Un détecteur multilinéaire est un détecteur comprenant une pluralité de capteur linéaire. Dans les dispositifs de l'art antérieur, chacun des capteurs linéaires est adapté pour détecter un sous-faisceau *SFᵢ* différent associé à un FOV_{¡} de la scène à observer. Dans cet agencement, chaque capteur linéaire acquiert une sous image associée à une bande spectrale Δλ*ᵢ* correspondant à la région *Rᵢ* filtrant le sous faisceau *SFᵢ*.

Alternativement, avec un détecteur matriciel, le dispositif de l'art antérieur comprend une pluralité de diaphragme de champ adaptés pour filtrer spatialement la lumière L incidente sur le détecteur. Ces diaphragmes sont placés dans un même plan perpendiculaire à l'axe optique AO de l'objectif imageur OI et situé à proximité du détecteur. Plus précisement, chaque diaphragme de champ filtre spatialement un sous-faisceau *SFᵢ*, filtré spectralement par une région *Rᵢ* du filtre F. Ainsi, l'objectif imageur forme sur le détecteur une pluralité de n > 2 sous-images séparées spatialement sur le détecteur et correspondant chacune à un champ de vue *FOVᵢ* de la scène à observer différent et à une bande spectrale particulière.

Dans ces deux architectures, seule une portion restreinte de la scène est observée (correspondant au champ de vue FOV_{¡} de chaque sous image). Ils présentent principalement un intérêt quand la scène est défilante, par exemple pour un système embarqué sur un satellite d'observation de la terre.

Un des inconvénients du dispositif illustré en figures 1A et 1B provient de la lumière parasite acquise par le détecteur Det. En effet, lors de la propagation de la lumière dans l'objectif imageur, toutes les longueurs d'onde du rayonnement sont comprises dans chaque sous faisceau *SFᵢ*. Les réflexions diffuses lors de la traversée de chaque optique sont susceptibles de contribuer différemment spatialement et spectralement à chaque sous images acquises sur le détecteur.

De plus, supposons que la lumière possède un spectre Δλ*ₜₒₜ* comprenant toutes les bandes spectrales Δ*λᵢ* filtrées par le filtre F. Chaque région *Rᵢ* du filtre F passe bande à Δλᵢ réfléchi fortement une portion du sous faisceau *SFᵢ* associé à la région *Rᵢ*. La portion réfléchie présente alors un spectre tel que : Δλ*ₜₒₜ* - Δ*λᵢ.* Cette portion réfléchie peut à nouveau se réfléchir sur les différents composants de l'objectif imageur et traverser une des autres régions *R_{≠i}* du filtre F et être détectée par le capteur Det. En effet, les régions *R_{≠i}* sont chacune passe-bande à une partie du spectre Δλ*ₜₒₜ* - Δ*λᵢ* de la portion réfléchie. Cette partie du spectre traversant les régions *R_{≠i}* sera donc détectée par le détecteur matriciel et constitue des rayons qui ne proviennent pas des champs de vue *FOV_{≠i}* de la scène associés aux sous faisceau *SF_{≠i}* filtrés par les régions *R_{≠i}*. Aussi, ces rayons constituent de la lumière parasite vis-à-vis de la sous-image associée à la région *R_{≠i}*. La figure 1B illustre le trajet optique d'une telle réflexion pour deux rayons x du sous faisceau *SF*₁, réfléchis par la portion *R*₁ du filtre sur la région *R*₃. Selon la géométrie de l'objectif imageur, il est possible d'obtenir des images fantômes superposées aux sous images associée aux régions *R_{≠i}*. Ces images fantômes correspondent à des images légèrement délocalisées de la sous-image associée au champ de vue *FOVᵢ* associée à la région *Rᵢ.*

La présente invention a pour but de résoudre les problèmes précités et plus précisément de réduire la lumière parasite et les images fantômes produites par la réflexion d'une portion du spectre de la lumière sur le filtre spectral placé devant le détecteur.

### Résumé de l'invention :

A cet effet, un objet de l'invention est un système optique d'imagerie multispectrale comprenant:
- un système optique dit telescope adapté pour collecter une lumière issue d'une scène à observer de manière à former une image intermédiaire dans un plan focal image dudit télescope,
- un système optique dit objectif imageur, un plan focal objet dudit objectif imageur étant confondu avec le plan focal image dudit télescope
- un détecteur adapté pour acquérir une image de l'image intermédiaire par l'objectif imageur,
- un système de filtrage spectral et spatial dit filtre amont, ledit filtre amont comprenant:
- un élément disposé dans le plan focal image dudit télescope et comprenant n > 2 diaphragmes, chaque diaphragme étant adapté pour définir un sous-faiceau associé à un champ de vue de la scène observée ;
- n filtres spectraux amont passe bande à une bande spectrale amont distincte des autres, chaque filtre spectral amont étant agencé de manière à filtrer un sous faisceau associé à un diaphragme;
l'objectif imageur étant adapté pour former, sur le détecteur, n sous-images correspondant respectivement auxdits n champs de vue de la scène associés aux n sous faiceaux ;
ledit système d'optique imagerie comprenant en outre n filtres spectraux aval, situés à proximité du détecteur et passe bande à une bande spectrale aval distincte des autres, un filtre spectral aval étant agencé de manière à filtrer un sous faisceau associé à un filtre spectral amont, une bande spectrale aval d'un filtre spectral aval possédant un recouvrement non nul avec la bande spectrale amont du filtre spectral amont associé.

Selon des modes particuliers de l'invention :
- la bande spectrale amont d'un filtre spectral amont est incluse dans la bande spectrale aval du filtre spectral aval associée ;
- la bande spectrale amont d'un filtre spectral amont est égale à la bande spectrale aval du filtre spectral aval associée ;
- des dimensions du filtre spectral amont et aval associée sont adaptées aux dimensions dudit sous faisceau défini par le diaphragrame associé ;
- les filtres spectraux amont sont situés dans un même plan perpendiculaire à un axe optique de l'objectif imageur ;
- les filtres spectraux amont et/ou les filtre spectraux aval forment une structure monobloc ;
- les filtres spectraux amont et/ou les filtre spectraux aval sont rapportés ou accolés sur une lame transparente à ladite lumière ;
- les filtres spectraux aval sont situés dans un même plan perpendiculaire à un axe optique de l'objectif imageur ;
- les filtres spectraux amonts sont agencés à proximité ou accolés à l'élément ;
- lequel le détecteur comprend une pluralité de détecteur linéaires selon une direction z.

### Brève description des figures :

D'autres caractéristiques, détails et avantages de l'invention ressortiront à la lecture de la description faite en référence aux dessins annexés donnés à titre d'exemple et qui représentent, respectivement :
D'autres caractéristiques, détails et avantages de l'invention ressortiront à la lecture de la description faite en référence aux dessins annexés donnés à titre d'exemple et qui représentent, respectivement :
[Fig.1A]
   et [Fig.1B] une vue schématique d'un système optique d'imagerie multispectral de l'art antérieur ;
[Fig.2A],
   [Fig.2B] et
   [Fig.2C] une vue schématique d'un système optique d'imagerie multispectral de l'invention ;
[Fig.3] une vue schématique des filtres spectraux amont et des diaphragmes d'un système optique d'imagerie multispectral de l'invention ;
[Fig.4] et
   [Fig.5] une vue schématique de respectivement un mode de réalisation de filtres spectraux amont du système optique d'imagerie multispectrale de l'invention.

### Description détaillée :

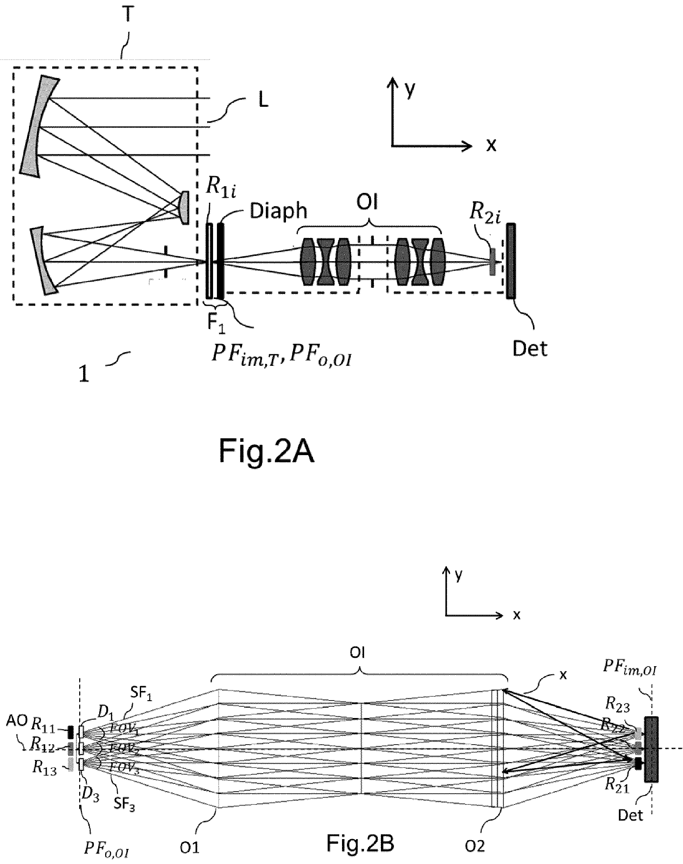

Les figures 2A et 2B présentent une vue schématique d'un système optique d'imagerie multispectrale 1 selon l'invention comprenant un télescope T et un objectif imageur OI. La figure 2A illustre l'agencement complet du dispositif. La figure 2B détaille plus précisément l'objectif imageur et le filtrage réalisé par le dispositif de l'invention.

Comme dans les dispositifs multispectraux de l'art antérieur illustrés en figures 1A et 1B, le système 1 comprend un système optique dit télescope T adapté pour collecter une lumière L issue de la scène à observer (non représentée dans les figures). Le télescope T est un système connu en soi adapté pour réaliser l'image d'un objet situé à l'infini par rapport à la distance focale du système. L'image de la scène formée par le télescope est appelée image intermédiaire *Iₜ* car le système d'imagerie de la figure 1A comporte un objectif imageur avec un plan focal objet *PF_{o,OI}* confondu avec le plan focal image *PF_{im,T}* du télescope.

L'objectif imageur réalise l'image de cette image intermédiaire *Iₜ* sur le détecteur Det. Dans l'exemple purement illustratif de la figure 2A et de la figure 2B, l'objectif imageur comporte deux groupes optiques distincts, un premier groupe O1 réalisant l'image de l'image intermédiaire, dite première image, à l'infini et un deuxième groupe O2 réalisant l'image de la première image dans le plan focal image du deuxième groupe *PF_{im,OI}.* Alternativement, selon un autre mode de réalisation, l'objectif imageur comprend un nombre différent de deux groupes de lentilles.

Le système 1 diffère des dispositifs multispectraux de l'art antérieur en qu'il comprend un système de filtrage spectral et spatial dit filtre amont *F*₁. Ce filtre amont est adapté pour définir et filtrer spectralement les sous-faisceaux *SFᵢ* associés aux sous-images *Iᵢ* de la scène acquises par le dispositif 1. Filtrer spectralement les sous-faisceaux *SFᵢ* avant qu'ils ne se propagent dans l'objectif imageur OI permet une importante réduction de la lumière parasité générée par la diffusion de la lumière L lors de la traversée de chaque optique. Ce système présente principalement un intérêt lorsque la scène est défilante.

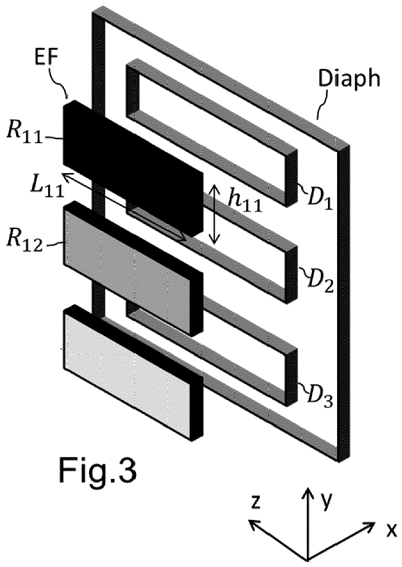

Plus précisément, (voir figure 2B) le filtre amont comprend un élément Diaph partiellement opaque à la lumière L et disposé dans le plan focal image *PF_{im,t}* du télescope et comprenant n > 2 diaphragmes *Dᵢ*. Par opaque, on entend ici une tranmission inférieure à 99,9%. Chaque diaphragme est adapté pour définir un sous-faiceau *SFᵢ* associé à un champ de vue FOV_{¡} de la scène observée. De plus, le filtre amont comprend n filtres spectraux amont *R*_{1*i*} passe bande à une bande spectrale amont Δλ_{1*i*} distincte des autres. Ces filtres sont disposés à proximité de l'élément partiellement opaque Diaph. Chaque filtre spectral amont est agencé de manière à filtrer un sous faisceau *SFᵢ* associé à un diaphragme *Dᵢ*. Dans les figures 2B et 3, à titre d'exemple non limitatif, trois diaphragmes *D*₁*, D*₂ et *D*₃ et trois filtres spectraux amonts *R*₁₁*, R*₁₂ et *R*₁₃ sont représentés. Selon un autre mode de réalisation, un nombre différent de trois diaphragmes et trois filtres spectraux amonts est choisi.

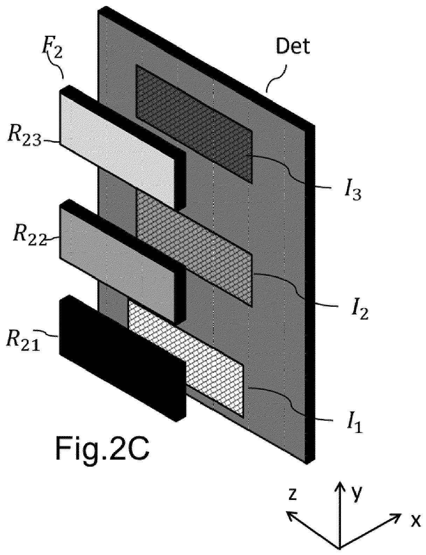

Comme illustré en figure 2C, grâce aux n diaphragmes *Dᵢ* qui définissent n sous faisceaux, l'objectif imageur forme sur le détecteur, n sous-images *Iᵢ* correspondant respectivement aux n champs de vue *FOVᵢ* de la scène associés aux n sous faiceaux *SFᵢ*.

Le système optique imagerie comprend en outre n filtres spectraux aval *R*_{2*i*}, tel qu'illustré figure 2C, situés à proximité du détecteur et passe bande à une bande spectrale aval Δλ_{2*i*} distincte des autres. Chaque filtre spectral aval *R*_{2*i*} est agencé de manière à filtrer un sous faisceau *SFᵢ* associé à un filtre spectral amont *R*_{1*i*}. De plus, une bande spectrale aval Δ*λ*_{2*i*} d'un filtre spectral aval posséde un recouvrement non nul avec la bande spectrale amont Δλ_{1*i*} du filtre spectral amont associé. Ainsi, le filtre spectral amont *R*_{1*i*} et aval *R*_{2*i*} associé sont passe bande à une portion spectrale commune de la lumière collectée. De cette manière, la sous image *Iᵢ* est représentative de l'information spectrale de la scène observée associée à ce champ de vue et à cette portion spectrale commune.

Grâce à l'utilisation des filtres spectraux amont combinés aux filtres spectraux aval, le bruit associé aux réflexions diffuses provoquées par la traversée de l'objectif imageur et détectées par le détecteur est fortement diminué. En effet, à l'inverse du dispositif présenté en figure 1A et 1B, chaque sous-faisceau est filtré spectralement avant la traversée de l'objectif imageur.

De plus, l'intensité de la portion de la lumière traversant l'objectif imageur et réfléchie par chaque filtre spectral aval *Rᵢ* vers l'objectif imageur présente alors un spectre tel que : |Δ*λ*_{1*i*} - Δλ_{2*i*}|. Selon comment sont choisis les filtres spectraux aval et amont, la largeur de bande spectrale de la portion réfléchie par chaque filtre spectral aval peut être très faible ou même nulle si les bandes spectral amont et aval associées sont identiques. De manière critique, même si la largeur de la bande spectrale n'est pas nulle, lorsque la portion réfléchie par chaque filtre spectral aval se réfléchie sur les différents composants de l'objectif imageur, elle sera filtrée spectralement par les autres régions *R_{≠i}* du filtre F et ne sera donc pas détectée par le capteur Det. En effet, les régions *R_{≠i}* sont chacune passe-bande à une bande passante aval distinctes de la bande spectrale |Δ*λ*_{1*i*} - Δ*λ*_{2*i*}| de la portion réfléchie. Grâce au filtre spectral amont, la contribution de ces rayons à la lumière parasite vis-à-vis de la sous-image associée à la région *R_{≠i}* est fortement diminuée. Les images fantômes superposées aux sous images associées aux régions *R_{≠i}* possèdent ainsi une intensité réduite (ou disparaissent). La figure 2B illustre le trajet optique d'une telle réflexion pour deux rayons x du sous faisceau *SF*₁, réfléchis par le filtre spectral aval *R*₂₃ sur le filtre spectral aval *R*₂₁.

Les filtres spectraux amont peuvent être placés en amont ou en aval du trajet optique par rapport à l'élément Diaph.

Selon un mode de réalisation, afin de réduire la lumière parasité détectée, au moins une partie de l'objectif imageur est recouverts d'une peinture noire et diffusante.

Selon un mode de réalisation, la bande spectrale amont Δλ_{1*i*} d'un filtre spectral amont est incluse dans la bande spectrale aval Δ*λ*_{2*i*} du filtre spectral aval associée. Ce mode de réalisation permet de relacher la contrainte de filtrage sur le filtre aval sans augumenter la quantité de lumière parasite provoquée par la travsersée de l'objectif imageur et détectée dans chaque sous image. En effet, les filtres spectraux amont filtrent chaque sous faisceau avant leur entrée dans l'objectif imageur. Chaque filtre spectral aval permet alors de filtrer la lumière parasite provenant des diffusions d'ordre supérieur des longueurs d'ondes associés aux sous faisceaux des autres filtres spectraux aval, cette lumière parasite étant déjà fortement réduite grâce aux filtres spectraux amont. L'inverse, c'est-à-dire un filtre aval filtrant spectralement de manière plus importante que le filtre amont correspondant, conduirait comparativement à une augmentation de la lumière parasite traversant chaque filtre aval.

Alternativement, selon un autre mode de réalisation, les filtres spectraux amont et aval correspondant sont identiques. Plus précisement, la bande spectrale amont Δλ_{1*i*} d'un filtre spectral amont est égale à la bande spectrale aval Δ*λ*_{2*i*} du filtre spectral aval associée. Ainsi, la fabrication des filtres spectraux amont et aval est simplifiée et le cout total du dispositif de l'invention est réduit.

Selon un mode de réalisation de l'invention, le détecteur Det comprend une pluralité de détecteur linéaires selon une direction z perpendiculaire à l'axe optique. Ainsi, chaque détecteur linéaire acquiert une sous-image et est adapté pour présenter une sensibilité de détection maximale sur la bande spectrale aval (et/ou amont) de la région aval (et/ou amont) filtrant le sous faisceau *SFᵢ* associé à cette sous image. L'efficacité de détection est ainsi améliorée. De manière préférentielle, dans ce mode de réalisation, les diaphragmes sont des fentes selon une direction z perpendiculaire à un axe optique AO de l'objectif imageur. La dimension des fentes est adaptée pour que la dimension de l'image d'une fente par l'objectif imageur soit inférieure ou égale à la dimension du détecteur linaire sur lequel l'image de la fente est réalisée.

La figure 3 illustre un mode de réalisation de l'invention, dans lequelles les filtres spectraux amont sont agencés dans un même plan (xy) perpendiculaire à l'axe optique AO de l'objectif imageur. Leur placement au sein du système optique est ainsi facilité. De manière purement illustrative, dans la figure 3, la forme des diaphragmes et des filtres spectraux amont est rectangulaire. Alternativement, les diaphragmes sont de forme carré, elliptique ou encore circulaire. Les dimensions du filtre spectral amont, *h*₁*ᵢ, L*_{1*i*} et aval associée (*h*_{2*i*},L_{2*i*} non représentées dans la figure 3) sont adaptées aux dimensions du sous faisceau *SFᵢ* défini par le diaphragrame *Dᵢ* associé. Plus précisement, les dimensions du filtre spectral amont et aval associée sont supérieures ou égales à celles du sous faisceau dans le plan où il traverse le filtre spectral amont et aval. Dans le mode de réalisation illustré dans la figure 3, les filtres spectraux amonts sont agencés à proximité de l'élément Diaph.

Alternativement, selon un autre mode de réalisation, les filtres spectraux amonts sont accolés à l'élément Diaph. Le placement des filtres spectraux amont et de l'élément Diaph au sein du système optique d'imagerie est ainsi facilité.

Alternativement, selon un autre mode de réalisation, les n filtres spectraux amont sont imbriqués dans les n diaphragmes. Ce mode de réalisation permet un construction plus robuste de l'ensemble filtre amont *F*₁ formé par les n filtres spectraux et les n diaphragmes.

De manière préférentielle, dans un mode de réalisation, les filtres spectraux aval sont agencés dans un même plan (*xy*) perpendiculaire à l'axe optique AO de l'objectif imageur. Leur placement au sein du système optique est ainsi facilité.

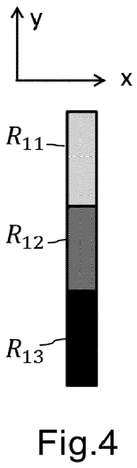

La figure 4 illustre un mode de réalisation dans lequel, les filtres spectraux amont forment une structure monobloc. C'est-à-dire que les régions amont *R*_{1*i*} sont empilées les une sur les autres dans la direction y. Le procédé de fabrication de ces filtres spectraux amont est ainsi simplifiée. Les régions *R*_{1*i*} peuvent par exemple être rapportées ou acolées les une avec les autres. Alternativement, les filtres spectraux aval et amont forment une structure monobloc comme illustré en figure 4. Aternativement, selon un autre mode de réalisation, seuls les filtres spectraux aval forment une structure monobloc.

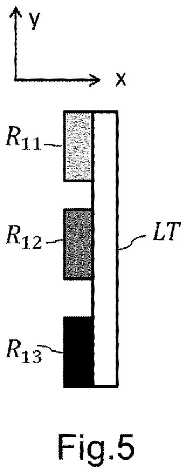

La figure 5 illustre un mode de réalisation dans lequel les filtres spectraux amont et/ou les filtres spectraux aval sont rapportés ou accolés sur une lame transparente LT à la lumière L collectée par le télescope. Par transparent, on entend ici une transmission supérieure à 99%. Dans une alternative de ce mode de réalisation, les diaphragmes sont formés par un dépôt métallique ou tout autre dépôt opaque à la lumière L, sur la lame transparente autour des filtres spectraux amonts. La lame transparente sur laquelle est réalisée le dépôt constitue alors l'élément Diaph. L'avantage de ce mode de réalisation est de permettre aux différents filtres d'être de dimensions égales à celles du sous faisceau dans le plan où il traverse le filtre spectral amont et/ou aval. Ainsi, le coût des filtres spectraux amont et aval est réduit par rapport au mode de réalisation de la figure 4.

## Revendications

1. Système optique d'imagerie multispectrale (1) comprenant:
- un système optique dit téléscope (T) adapté pour collecter une lumière (L) issue d'une scène à observer de manière à former une image intermédiaire (*Iₜ*) dans un plan focal image (*PF_{im,t}*) dudit télescope,
- un système optique dit objectif imageur (OI), un plan focal objet (*PF_{o,OI}*) dudit objectif imageur étant confondu avec le plan focal image dudit télescope
- un détecteur (Det) adapté pour acquérir une image de l'image intermédiaire par l'objectif imageur,
- un système de filtrage spectral et spatial dit filtre amont (*F*₁), ledit filtre amont comprenant:
- un élément (Diaph) disposé dans le plan focal image (*P F_{im,t}*) dudit télescope et comprenant n > 2 diaphragmes (*Dᵢ*), chaque diaphragme étant adapté pour définir un sous-faiceau (*SFᵢ*) associé à un champ de vue (FOV_{¡}) de la scène observée ;
- n filtres spectraux amont (R_{1*i*}) passe bande à une bande spectrale amont (Δ*λ*_{1*i*}) distincte des autres, chaque filtre spectral amont étant agencé de manière à filtrer un sous faisceau (*SFᵢ*) associé à un diaphragme (*Dᵢ*) ;
l'objectif imageur étant adapté pour former, sur le détecteur, n sous-images (*Iᵢ*) correspondant respectivement auxdits n champs de vue (FOV*ᵢ*) de la scène associés aux n sous faiceaux (*SFᵢ*) ;
ledit système d'optique imagerie comprenant en outre n filtres spectraux aval (*R*_{2*i*}), situés à proximité du détecteur et passe bande à une bande spectrale aval (*λ*_{2*i*}) distincte des autres, un filtre spectral aval étant agencé de manière à filtrer un sous faisceau (*SFᵢ*) associé à un filtre spectral amont, une bande spectrale aval (Δ*λ*_{2*i*}) d'un filtre spectral aval possédant un recouvrement non nul avec la bande spectrale amont (Δ*λ*_{2*i*}) du filtre spectral amont associé.

2. Système optique selon la revendication 1, dans lequel la bande spectrale amont (Δ*λ*_{1*i*}) d'un filtre spectral amont est incluse dans la bande spectrale aval (Δ*λ*_{2*i*}) du filtre spectral aval associée.

3. Système optique selon la revendication 1, dans lequel la bande spectrale amont (Δ*λ*_{1*i*}) d'un filtre spectral amont est égale à la bande spectrale aval (Δ*λ*_{2*i*}) du filtre spectral aval associée.

4. Système optique selon l'une quelconque des revendications 1 à 3, dans lequel des dimensions du filtre spectral amont et aval associée sont adaptées aux dimensions dudit sous faisceau (*SFᵢ*) défini par le diaphragrame associé.

5. Système optique selon l'une quelconque des revendications précédentes, dans lequel lesdits filtres spectraux amont sont situés dans un même plan perpendiculaire à un axe optique (AO) de l'objectif imageur (OI)

6. Système optique selon la revendication 5, dans lequel les filtres spectraux amont et/ou les filtres spectraux aval forment une structure monobloc.

7. Système optique selon la revendication 5, dans lequel les filtres spectraux amont et/ou les filtres spectraux aval sont rapportés ou accolés sur une lame transparente (LT) à ladite lumière (L).

8. Système optique selon l'une quelconque des revendications précédentes, dans lequel lesdits filtres spectraux aval sont situés dans un même plan perpendiculaire à un axe optique (AO) de l'objectif imageur (OI).

9. Système optique selon la revendication précédente, dans lequel lesdits filtres spectraux amonts sont agencés à proximité ou accolés à l'élément (Diaph).

10. Système optique selon l'une quelconque des revendications précédentes, dans lequel le détecteur (Det) comprend une pluralité de détecteurs linéaire selon une direction z.

11. Système optique selon la revendication précédente, dans lequel les diaphragmes sont des fentes selon une direction z perpendiculaire à un axe optique (AO) de l'objectif imageur.
